(19) Europäisches Patentamt
European Patent Office
Office européen des brevets

(11) Publication number : **0 466 500 A2**

# (12) EUROPEAN PATENT APPLICATION

(21) Application number : **91306335.0**

(51) Int. Cl.$^5$ : **H04N 5/21**, H04N 7/08

(22) Date of filing : **12.07.91**

(30) Priority : **12.07.90 JP 182601/90**

(43) Date of publication of application : **15.01.92 Bulletin 92/03**

(84) Designated Contracting States : **DE FR NL**

(71) Applicant : **KABUSHIKI KAISHA TOSHIBA
72, Horikawa-Cho Saiwai-ku
Kawasaki-shi Kanagawa-ken (JP)**

(72) Inventor : **Kawai, Kiyoyuki, c/o Intellectual Property Div.
Toshiba Corporation, 1-1-1, Shibaura
Minato-ku, Tokyo (JP)**

(74) Representative : **Muir, Ian R. et al
HASELTINE LAKE & CO. Hazlitt House 28
Southampton Buildings Chancery Lane
London WC2A 1AT (GB)**

## (54) Orthogonal multiplex signal processing apparatus.

(57) A television signal transmitter for transmitting a conventional television signal as a main signal according to a VSB system, and in-phase modulating the main signal in a DSB region of the VSB region and multiplexing the main signal with a sub signal having an orthogonal modulation. The transmitter has a first inserting circuit (3, 4, 22) for inserting a reference signal into a first specific period within a vertical blanking period of the main signal, a second inserting circuit (13, 14, 22) for inserting a second reference signal into every other frame of the main signal in a second specific period of within a vertical blanking period of the main signal, a first interrupting circuit (22) for interrupting the transmission of the first reference signal to inspect for ghost images of the sub signal in the first specific period and its immediately preceding scanning period and a second interrupting circuit (22) for interrupting the transmission of the second reference signal to inspect for ghosts of the sub signal in the second specific period of frames in which the second reference signal is not inserted.

EP 0 466 500 A2

Jouve, 18, rue Saint-Denis, 75001 PARIS

FIG. 1

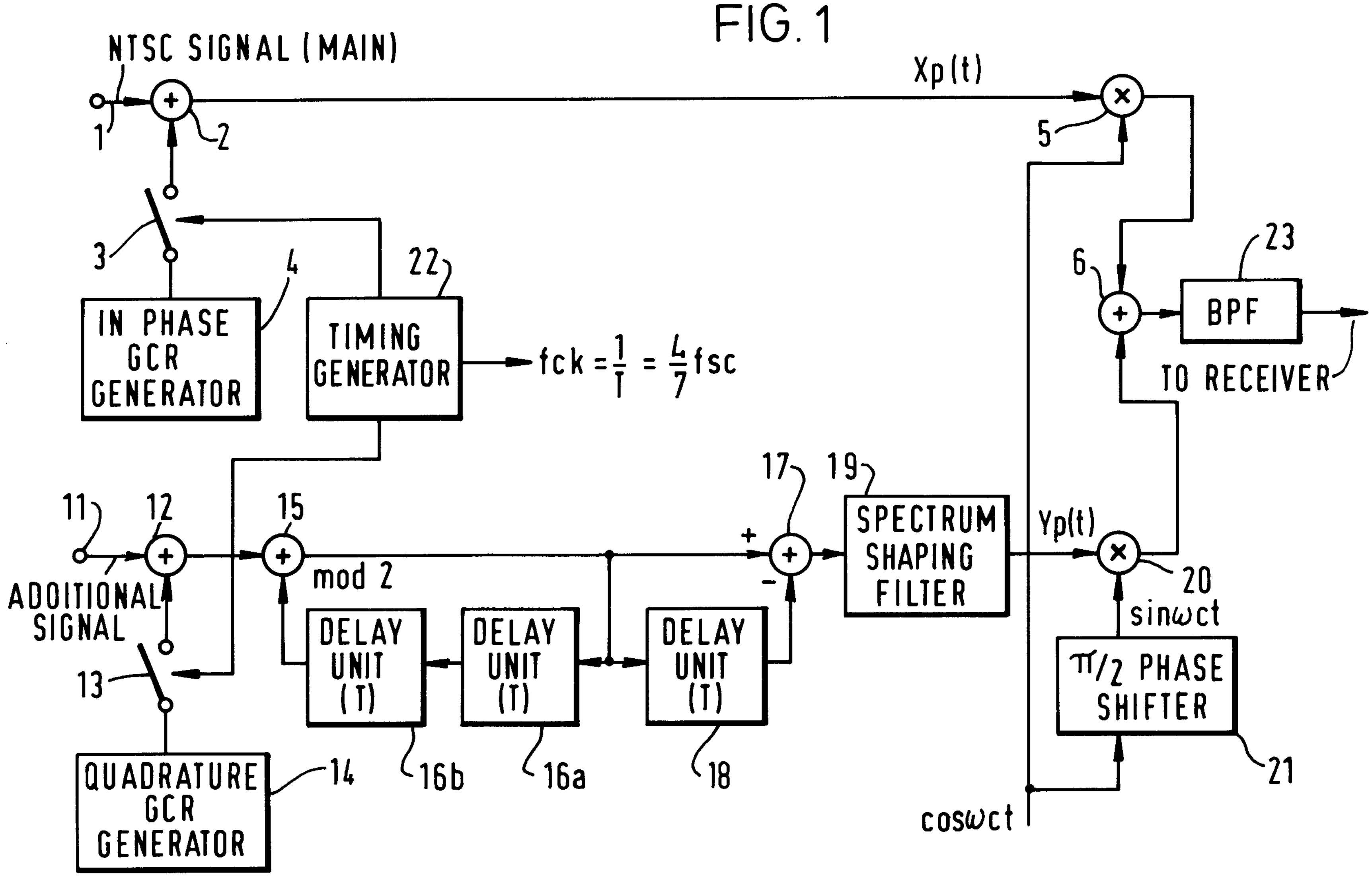

NTSC SIGNAL (MAIN)
Xp(t)
1
2
3
4
5
6
IN PHASE GCR GENERATOR
22
TIMING GENERATOR
fck = 1/T = 4/7 fsc
23
BPF
TO RECEIVER
11
12
15
17
19
ADDITIONAL SIGNAL
mod 2
+
−
SPECTRUM SHAPING FILTER
Yp(t)
20
sinωct
13
DELAY UNIT (T)
DELAY UNIT (T)
DELAY UNIT (T)
π/2 PHASE SHIFTER
QUADRATURE GCR GENERATOR
14
16b
16a
18
21
cosωct

The present invention relates to an orthogonal multiplex signal processing apparatus which is suitable for a television signal transmission and receiving system.

In a conventional television broadcasting system, television signals are usually transmitted using a vestigial sideband modulation. According to the NTSC color television broadcasting standard, a frequency spectra has double sidebands symmetrical in the range of ± 1.25 MHz around a video carrier frequency. If, therefore, television signals are limited to this frequency band, an orthogonal biaxial modulation is available for tramsmitting any sub signal in addition to conventional video signals.

Such a proposal has been discussed by Torii, "Study for Improving Horizontal Resolution by Employing VSB-AM", in "Draft for 1986 (Japan) National Conference on Television".

The proposal, however, has a problem in its application to actual transmission lines. That is, a multipath problem (i.e., ghost) occurs in a surface broadcasting system and a cable reflection problem occurs in a CATV system.

Hereinafter, discussions will be focused on only the double sidebands of video carriers.

Assuming that a video signal is given by "p(t)" and a video carrier angular frequency is given by "$\omega c$", an AM-modulated wave is represented by the following expression.

$$\{1 + p(t)\} \cos \omega ct \quad (1)$$

A ghost wave with a delay "$\tau n$" and a coefficient "$\alpha n$" is represented by the following equation.

$$\begin{aligned} &\alpha n \{1 + p(t - \tau n)\} \cos \omega c(t - \tau n) \\ &= \alpha n \{1 + p(t - \tau n)\} (\cos \omega c \, \tau n \cos \omega ct \\ &\quad + \sin wc\tau n . \sin wct) \\ &= \alpha n \{1 + p(t - \tau n)\} (\cos \theta n \cos \omega ct \\ &\quad + \sin \theta n \sin \omega ct) \qquad \ldots\ldots \quad (2) \end{aligned}$$

where, $\theta n = \omega c \, \tau n$.

The desired wave expressed by the equation (1) only includes the component "$\cos \omega ct$", but it is seen that the component "$\alpha n \{1 + p(t - \tau n)\} \sin \theta n$" is generated as a quadrature component "$\sin \omega ct$" in the ghost wave expressed by the equation (2) in addition to the component "$\cos \omega ct$".

That is, if the ideal synchronous detection was made at a receiver,

Synchronous Demodulated Component

$$= p(t) + \alpha n \cos\text{-}\theta n\text{-}p(t - \tau n) \quad (3)$$

quadrature component

$$= \alpha n \sin \theta n \, p(t - \tau n) \quad (4)$$

As the processes expressed by above equations are linear, the principle of superimposition holds good in multighosts.

Therefore, they can be expanded to the following equations;

Synchronous Demodulated In-phase Component

$$= p(t) + \Sigma \alpha n \cos \theta n \, p(t - \tau n) \quad (5)$$

Demodulated Quadrature Component

$$= \Sigma \alpha n \sin \theta n \, p(t - \tau n) \quad (6)$$

Equation (6) indicates that the crosstalk of quadrature component is generated by ghosts. The amount of crosstalk is variable depending on $\theta n$, but becomes maximum when $\theta n = \pi/2$ Radian. As $\theta n = 2\pi fc \, \tau n$ when $\omega c = 2\pi fc$, thus

$$\tau n = (1/4)(1/fc) = 1.25 \text{ [ns]} \quad (7)$$

is obtained when $\theta n = \pi/2$ and $fc = 200$ MHz.

This value is generally observed as a delay group on actual equipment.

In the current television broadcasting system, crosstalk of quadrature components is generated at most

receiving sites and any receiving site without crosstalk is extremely unlikely in practice. In the current television broadcasting system, a short distance ghost image of small $\tau n$ and with an $\simeq$ 0.5 is constantly observed but it has not become an issue so far because only such small effects, such as the quality of the picture becoming slightly indistinct or some ringing, are generated.

Generally, the ghost image trouble that has become an issue is long distance ghost image showing a picture doubly or trebly.

However, in case of multiplex transmission of additional data using the quadrature component, the quadrature component of the video component expressed by equation (6) leaks into the additional data and therefore, a large problem is generated for short distance ghosts which have not been an issue so far.

The problems described above, which are caused by the ghost or the cable reflection, are observed a linear distortions.

Therefore, this linear distortion can be cancelled when an equalizing filter having the reverse function of the transfer function used in the transmission system is used at a receiver. A two-dimensional filter is effective for two-dimensional transmission using orthogonal modulation.

At a receiver, it is possible to construct an equalization filter by copying all receiving conditions. However, transmission system characteristics are generally not known at a receiver, and therefore it becomes necessary to have a process in which a transmitter transmits a known reference signal and a receiver deduces characteristics of a transmission system from the reference signal.

The one dimensional reference signal to be used for standard video signals has been decided after various discussions and the multiplex transmission of a reference waveform on a time-sharing basis in the vertical blanking period commenced in regular broadcasting in 1989.

However, few proposals have been made so far for a two-dimensional reference signal.

The present invention has been made to obtain a system which processes two-dimensional reference signals effectively without affecting unidimensional reference signals for video signals.

When a two signal multiplexing technique using orthogonal modulation is used, to improve ghost image performance at a receiver it is necessary to define two signals, that is, a two-dimensional reference signal.

However, concerning standard video signals, a one dimensional reference waveform has been already decided (see, Kawauchi, "Discussions on System Standardization", in "Proceeding of the Institute of Television Engineers of Japan", Vol. 43, No. 5, 1989, pp. 438-439).

When the orthogonal multiplex is considered as a new service to be added to the conventional broadcasting service, the compatibility with the conventional broadcasting service is required. The orthogonal multiplex component is regarded as noise and becomes a disturbance component for conventional receivers.

Therefore, in order to restrain visual disturbance below tolerance, it is necessary to keep the power of the orthogonal multiplex component transmitted to within about -20dB to -30 dB of the standard video signal component. That is, as the transmission level of the video signal is larger than the orthogonal multiplex signal by 10-30 times, a crosstalk component larger than the original multiplex signal by 5-15 times can possibly be generated even when a ghost with a D/U (Desired signal to Undesired signal) ratio of about 6dB. This crosstalk component becomes a large noise when compared to the multiplex signal.

At general receiving sites, a long distance ghost with the D/U ratio of as much as 6 dB, which is noticeable as double images, is scarcely received. However, as to a so-called short distance ghost image with a delay less than 0.5 $\mu$s, a prominent ghost image is rarely received.

In view of the above, it is difficult to realize the effective waveform equalization at a receiver using a reference waveform having compatibility with the current broadcasting service, which is introduced to enable effective crosstalk cancellation as to the quadrature component.

As described above, when a sub signal is inserted in a DSB (Double Sideband) region of AM-modulated television signal according to a VSB (Vestigial Sideband) transmission system using the orthogonal multiplex technique, it is necessary to realize the effective waveform equalizing function in order to receive orthogonally multiplexed sub signals satisfactorily. In this instance, a means having the compatibility which does not disturb signals which are currently broadcasted is required.

The present invention therfore seeks to provide an orthogonal multiplex signal processing apparatus which is compatible with the current broadcasting system and enables it to realize the effective waveform equalization of orthogonal signal.

An orthogonal multiplex signal processing apparatus according to one aspect of the present invention has a first inserting circuit for inserting a reference signal into a first specific period within a vertical blanking period of the main signal, a second inserting circuit for inserting a second reference signal into every other frame of the main signal in a second specific period of within a vertical blanking period of the main signal, a first interrupting circuit for interrupting the transmission of the first reference signal to inspect for ghost images of the sub signal in the first specific period and its immediately preceding scanning period and a second interrupting

circuit for interrupting the transmission of the second reference signal to inspect for ghosts of the sub signal in the second specific period of frames in which the second reference signal is not inserted.

For a better understanding of the present invention and to show how it may be brought about, reference will now be made by way of example to the accompanying drawings, wherein:

FIGURE 1 is a diagram for explaining the construction of the processing apparatus at a transmitter involved in the embodiment of the present invention;

FIGURE 2 is a signal waveform diagram for explaining a GCR (ghost cancel reference) signal inserting position;

FIGURE 3 is an explanatory diagram showing an example of a GCR signal to be inserted in sub signal;

FIGURE 4 is an explanatory diagram of CRI signal;

FIGURE 5 is an explanatory diagram of random data;

FIGURE 6 is an explanatory diagram of sub signal transmission spectrum;

FIGURE 7 is a diagram explaining the construction of the receiver according to the present invention; and

FIGURE 8 is a diagram for explaining the construction of another embodiment of the receiver.

The present invention will be described in detail with reference to the FIGURES 1 through 8. Throughout the drawings, like or equivalent reference numerals or letters will be used to designate like or equivalent elements for simplicity of explanation.

First, before explaining the construction of the orthogonal multiplex signal processing apparatus according to the present invention, the orthogonal multiplex of signals at VSB modulation which is used in the current NTSC system broadcasting is considered.

It is assumed that xp(t) is modulated in-phase with a carrier using the VSB modulation in the DSB region and yp(t) is orthogonally modulated and multiplexed. xp(t) is AM-modulated as usual and yp(t) is AM-modulated in a suppressed-carrier manner.

However, xp(t) is smaller than 4.2 MHz and yp(t) is smaller than 1.25 MHz. Then, modulated wave s(t) is expressed by the following equation, where $\delta(t)$ is a component relative to xp(t) and $\sigma(t)$ is a component relative to yp(t) :

$$s(t) = \delta(t) + \sigma(t) \quad (8)$$

Here, $\delta(t)$ and $\sigma(t)$ can be expressed by the following equations:

$$\delta(t) = \{1 + x\,p(t)\} \cos \omega ct - x\,q(t) \sin \omega ct \quad (9)$$

$$\sigma(t) = y\,p(t) \sin \omega ct - y\,q(t) \cos \omega ct \quad (10)$$

where $\omega c$ indicates the carrier frequency, xq indicates the quadrature component produced from xp by asymmetry of the sideband and yq indicates the quadrature component produced from yp according to an asymmetry of the sidebands.

If an ideal DSB is maintained, xq and yp are not produced as a matter of course. However quadrature components xq and yp are produced from the sideband asymmetry due to filter process, etc.

Ghost wave $\delta(t)$ with a time lag $\tau n$ is expressed as follows:

$$\begin{aligned}\delta(t - \tau n) &= \{1 + x\,p(t - \tau n)\} \cos \omega c(t - \tau n) \\ &\quad - x\,q(t - \tau n) \sin \omega c(t - \tau n) \\ &= [\cos \theta n \{1 + x\,p(t - \tau n)\} \\ &\quad + \sin \theta n\, x\,q(t - \tau n)] \cos \omega ct \\ &\quad + [\sin \theta n \{1 + x\,p(t - \tau n)\} \\ &\quad - \cos \theta n\, x\,q(t - \tau n)] \sin \omega ct \quad \ldots. (11)\end{aligned}$$

where, $\theta n = = \omega c\, \tau n$.

Similarly, the ghost wave of $\sigma(t)$ with a time lag $\tau m$ is expressed as follows:

$$\sigma(t - \tau m)$$
$$= y\,p(t - \tau m) \sin \omega c\,(t - \tau m)$$
$$- y\,q(t - \tau m) \cos \omega c\,(t - \tau m)$$
$$= \{\cos \Phi m\; y\,p(t - \tau m)$$
$$- \sin \Phi m\; y\,q(t - \tau m)\} \sin wct - \{\sin \Phi m\; yp(t - \tau m)$$
$$+ \cos \Phi m\; y\,q(t - \tau m)\} \cos \omega ct \quad \ldots\ldots (12)$$

where, $\Phi m = \omega c\, \tau m$.

The receiving signal with the ghost wave superimposed is expressed by the following equation:

$$s(t) = \delta(t) + \sigma(t) + \Sigma\, \alpha n\, \delta(t - \tau n)$$
$$+ \Sigma\, \beta m\, \sigma(t - \tau n) \quad \ldots\ldots (13)$$

where, $\alpha n$ and $\beta m$ are coefficients of ghost image amplitude, respectively.

Assuming that from the above equations (9), (10), (11), (12) and (13), received signal "s(t)" was orthogonally detected by "cos ωct" and "sin ωct", the in-phase detected output u(t) is as follows:

$$u(t) = 1 + x\,p(t) - y\,q(t)$$
$$+ \Sigma\, \alpha n\, [\cos \theta n\, \{1 + x\,p(t - \tau n)\}$$
$$+ \sin \theta n\; x\,q(t - \tau n)]$$
$$- \Sigma\, \beta m\, [\sin \Phi m \cdot y\,p(t - \tau m)$$
$$+ \cos \Phi m\; y\,q(t - \tau m)] \quad \ldots\ldots (14)$$

The orthogonally detected output v(t) is as follows:

$$v(t) = y\,p(t) - x\,q(t)$$
$$+ \Sigma\, \alpha n\, [\sin \theta n\, \{1 + x\,p(t - \tau n)\}$$
$$- \cos \theta n\; x\,q(t - \tau n)] + \Sigma\, \beta m\, \{\cos \Phi m\; y\,p(t - \tau m)$$
$$- \sin \Phi m\; y\,q(t - \tau m)\} \quad \ldots\ldots (15)$$

As seen from the equations (14) and (15), detected outputs have a linear relation in connection with xp and yp.

When the sideband asymmetrical characteristic is expressed by the transfer functions of frequency region Hx(ω) and Hy(ω),

$$x\,q(t) = F^{-1}[Hx(\omega)\, F\{x\,p(t)\}] \quad (16)$$
$$y\,q(t) = F^{-1}[Hy(\omega)\, F\{y\,p(t)\}] \quad (17)$$

Therefore, the equation (14) is expressed by the following equation in the frequency region:

$$u(\omega) = 1 + x - Hy\ y + \Sigma\ \alpha n\ \{\cos\theta n\ \{1 + e^{-j\tau n\omega}\ x)$$
$$+ \sin\theta n\ Hx\ e^{-j\tau n\omega}\ x\} - \Sigma\ \beta m\ (\sin\Phi m\ e^{-j\tau m\omega}\ y$$
$$+ \cos\Phi m\ e^{-j\tau m\omega}\ Hy\ y$$
$$= 1 + x + \Sigma\ \alpha n\ \cos\theta n$$
$$+ \Sigma\ \alpha n\ (\cos\theta n + \sin\theta n\ H_x)\ e^{-j\tau n\omega} x$$
$$-[Hy + \Sigma\ \beta m\ (\sin\Phi m + \cos\Phi m\ Hy)\ e^{-j\tau m\omega}]y \quad (18)$$

Similarly, the equation (15) is expressed by the following equation:

$$v(\omega) = y - Hx\ x + \Sigma\ \alpha n\ \{\sin\theta n\ \{1 + e^{-j\tau n\omega}\ x)$$
$$- \cos\theta n\ Hx\ e^{-j\tau n\omega}\ x\} + \Sigma\ \beta m\ (\cos\Phi m\ e^{-j\tau m\omega}\ y$$
$$- \sin\Phi m\ Hy\ e^{-j\tau m\omega}\ y)$$

$$= y + \Sigma\ \alpha n\ \sin\theta n$$
$$+ \Sigma\ \beta m\ (\cos\Phi m - \sin\Phi m\ Hy)\ e^{-j\tau m\omega}\ y$$
$$+[-Hx + \Sigma\ \alpha n\ (\sin\theta n - \cos\theta n\ Hx)\ e^{-j\tau n\omega}]x \quad (19)$$

As a DC component is used for the television signal, the television signal can be considered by disregarding DC components. Therefore, if 1 + Σ an cos θn in the equation (18) and Σ an sin θn in the equation (12) are omitted, the equation (18) and (19) will become as follows:

$$u(\omega) = x + \Sigma\ \alpha n\ (\cos\theta n + \sin\theta n\ Hx)\ e^{-j\tau n\omega}\ x$$
$$+ [Hy + \Sigma\ \beta m\ (\sin\Phi m + \cos\Phi m\ Hy)\ e^{-j\tau m\omega}]\ y \quad (20)$$

$$v(\omega) = y + \Sigma\ \beta m\ (\cos\Phi m - \sin\Phi m\ Hy)\ e^{-j\tau m\omega}\ y$$
$$+ [-Hx + \Sigma\ \alpha n\ (\sin\theta n - \cos\theta n\ Hx)\ e^{-j\tau n\omega}]\ x \quad (21)$$

Now following equations (15) - (18) are assumed.

$$Gxx(\omega) = \Sigma\ \alpha n\ (\cos\theta n + \sin\theta n\ Hx)e^{-j\tau n\omega} \quad (22)$$
$$Gyx(\omega) = Hy + \Sigma\ \beta m(\sin\Phi m + \cos\Phi m\ Hy)e^{-j\tau m\omega} \quad (23)$$
$$Gyy(\omega) = \Sigma\ \beta m(\cos\Phi m - \sin\Phi m\ Hy)e^{-1\tau m\omega} \quad (24)$$
$$Gxy(\omega) = -Hx + \Sigma\ \alpha n\ (\sin\theta n - \cos\theta n\ Hx)e^{-j\tau n\omega} \quad (25)$$

then, u(ω) and v(ω) will become as follow:

$$u(\omega) = \{1 + Gxx(\omega)\}\ x + Gyx(\omega)\ y \quad (26)$$
$$v(\omega) = \{1 + Gyy(\omega)\}\ Y + Gxy(\omega)\ X \quad (27)$$

Therefore, "x" and "y" are expressed as follows:

$$x = \frac{\begin{vmatrix} u & Gys \\ v & 1 + Gyy \end{vmatrix}}{\begin{vmatrix} 1 + Gxx & Gyx \\ Gxy & 1 + Gyy \end{vmatrix}}$$

$$= \frac{(1 + Gyy)u - Gyx\,v}{(1 + Gxx)(1 + Gyy) - Gyx\,Gxy} \quad (28)$$

$$y = \frac{\begin{vmatrix} 1 + Gxx & u \\ Gxy & v \end{vmatrix}}{\begin{vmatrix} 1 + Gxx & Gyx \\ Gxy & 1 + Gyy \end{vmatrix}}$$

$$\frac{(1 + Gxx)\,v - Gxy\,u}{(1 + Gxx)(1 + Gyy) - Gyx\,Gxy} \quad (29)$$

"x" and "y" are also expressed as follows:

$$x = C1\,u + C2\,v \quad (30)$$
$$y = C3\,u + C4\,v \quad (31)$$

Here, the following equations hold good:

$$C1 = (1 + Gyy)/\{(1 + Gxx)(1 + Gyy) - Gyx\,Gxy\} \quad (32)$$
$$C2 = -Gyx/\{(1 + Gxx)(1 + Gyy) - Gyx\,Gxy\} \quad (33)$$
$$C3 = -Gxy/\{(1 + Gxx)(1 + Gyy) - Gyx\,Gxy\} \quad (34)$$
$$C4 = (1 + Gxx)/\{(1 + Gxx)(1 + Gyy) - Gyx\,Gxy\} \quad (35)$$

Therefore, if the processes of detecting outputs "u" and "v" by the equalization filters C1, C2, C3 and C4 expressed by the equations (30) and (31) are realized at the receiver, equalization outputs are obtained as the same "x" and "y" as those at the transmitter.

Concerning the in-phase signal "x", it is planned that a ghost cancel reference (referred to as GCR hereinafter) signal is inserted to the 18H and the 281H as described in Kawachi, "System Standardization and State of Discussion", Journal of Society of Television, Vol. 43, No. 5, 1989, pp 438-439. Hereinafter, this signal is referred to as "Rx".

The quadrature component "Y" is not transmitted in the period when "Rx" is transmitted and the preceding line period, thus quadrature component "Y" is "0" :

$$1 + Gxx = u/Rx \quad (36)$$
$$Gxy = v/Rx \quad (37)$$

Similarly, for the period when the GCR signal "Ry" relative to the orthogonal signal "Y" is transmitted, it is desirable that the in-phase "x" is "0". However, some in-phase signal "x" is transmitted for the whole period in the current broadcasting.

Therefore, what is needed to transmit "Ry" by assuming the transmission signal is equivalent to "0" is as follows:

As the vertical synchronizing period 1H - 9H is for the frame repetitive signal, insert "Ry" into 1H - 9H (or 263H - 272H) of the first frame and insert "0" into 1H - 9H (or 236H - 272H) of the second frame.

Then, when a difference between the first and third fields is taken at the receiver, the in-phase signal "x" in 1H - 3H can be cancelled, "x" is regarded to be "0" and "Ry" only is obtained. Therefore, from the equation (26) and (27), the following equations can be obtained:

$$Gyx = u/Ry \quad (38)$$
$$1 + Gyy = v/Ry \quad (39)$$

Since transmission characteristics "Gxx", "Gyz", "Gyy" and "Gxy" are all decided by the equations (32) - (35), if a reverse characteristic filter is composed at the receiver according to the equations (28) and (29) or (30) and (31), the transfer functions of the in-phase signal and the orthogonal signal as the overall transmission and receiving characteristic will become "1" and the transfer function expressing mutual crosstalk will become "0".

The present invention has been made based on the principle described above.

FIGURE 1 shows the construction of the transmitter in one embodiment of the present invention.

The current NTSC signal is input to the terminal 1 and the GCR signal for in-phase signal is inserted in the adder 2. The GCRx signal is output from the in-phase GCR generator 4 and supplied to the adder 2 through the switch 3. Switch 3 is controlled by the timing generator 22.

The switch 3 is turned ON in 18H and 281H of the vertical blanking period as shown in FIGURE 2. "H" indicates the horizontal period. The main signal with the GCRx signal superimposed in the adder 2 in this way during the specific scanning period is multiplied with the in-phase carrier "cos ωct" in the multiplier 5. As a result, the inphase modulated main signal is obtained from the multiplier 5. This in-phase modulated signal is input to the adder 6.

On the other hand, a sub signal is supplied to the input terminal 11. This sub signal is a binary digital signal having data rate of "fck" ("fck = 4/7 fsc", where fsc is the color subcarrier).

The timing generator 22 turns ON the switch 13 in 1H - 9H (see FIGURE 2) and introduces the quadrature signal's GCRy signal into the adder 12. The GCRy signal is generated in the quadrature GCR generator 14. The GCRy signal is added to sub signal in the adder 12.

Output from the adder 12 is input to the adder 15 in Mode 2. Output from this adder 15 is fedback to the adder 15 through the delay units 16a and 16b. The adder 15, and the delay units 16a and 16b constructed a cyclic type filter and the delay time "T" of the delay units 16a and 16b is, for instance, "T = 1/fck". This filter output is input to the subtractor 17 and the delay unit 18. Output from the delay unit 18 is input to the subtractor 17. A differential value obtained from the subtractor 17 is supplied to the spectrum shaping filter 19. This spectrum shaping filter 19 has the frequency characteristic of "cos πfT".

The adder 15, delay unit 16a, 16b and 18, subtractor 17 and spectrum shaping filter 19 are provided for making the spectra of sub signals transmitted uniform, preencoding them to make waveform equalization at the receiver easy, and at the same time, when transmitting sub signals, limiting the frequency band to prevent the modulated signal from interfering with television signals.

FIGURE 3 shows an example of GCRy signal. As a The clock line signal (CRI data) is transmitted for 0.5H as a sampling clock reference at the receiver and thereafter, random data (for instance, M sequence) is transmitted for 2H.

Uniformly distributed spectra are desirable for random data from the viewpoint of equalization characteristics at the receiver. Therefore, when the random data period is extended, the spectrum will become more dense and advantageous, but about 2H is sufficient for practical use.

FIGURE 4 shows an example of CRI data processing in progress. FIGURE 4A is digital input, FIGURE 4B is preencoded output, FIGURE 4C is output from the adder 17, and FIGURE 4D is output from the spectrum shaping filter.

FIGURE 5 shown an example of random data processing progress. FIGURE 5A is digital random input, FIGURE 5B is pre-encoded output, FIGURE 5C is output from the adder 17 and FIGURE 5D is output from the spectrum shaping filter 19.

As described above, the GCRy signal is processed so that spectra are uniformly distributed to make waveform equalization easy.

FIGURE 6A shows the characteristic of the spectrum shaping filter 19. Output from this spectrum shaping filter 19 is input to the multiplier 20. The in-phase carrier of cos ωct is phase shifted by the π/2 phase shifter 21 to form the orthogonal carrier and supplied to the multiplier 20. Therefore, the output from the multiplier 20 becomes an orthogonal modulated signal. This orthogonal modulated signal is input to the adder 6 and then after being combined with the previous in-phase modulated signal, band limited by the band-pass filter (BPF) 23 and output to the transmission system.

Shown in FIGURE 6B is the overall characteristic of the transmitter described above. As seen from this characteristic, since the sub signal spectrum was preencoded, the DC component is zero and the peak level of the spectrum exists at "1/4 fck = fsc/7 = (65/2) fH" (fH is Horizontal synchronizing frequency). Here, "1/4 fck" has the relation of line inversion and has the effect of reducing visual interference on a TV set currently in use. Further, as "1/2 fck" is 1 MHz, orthogonal multiplex in the VSB modulated DSB region is possible.

FIGURE 7 shows an example at the receiver of this system.

Picture intermediate frequency (PIF) of the received channel is supplied to the multipliers 31 and 41 via the terminal 30. In the multiplier 31, multiplication of PIF and reproduced carrier "sin ωct" (the phase shifted reproduced carrier "cos ωct" by the π/2 phase shifter 50) is carried out and the orthogonal synchronous detection is performed.

Outputs from the multipliers 31 and 41 (in-phase and orthogonal detection outputs) are input to and digitized in the analog/digital (A/D) converters 33 and 43, respectively via the low-pass filters (LPF) 32 and 42.

The output signal (NTSC signal) from the A/D converter 33 is input to the waveform equalizing filter 67 and the ghost image is cancelled here. The output signal (sub signal) from the A/D converter 43 is input to the

waveform equalizing filter 77 and the ghost image is cancelled here.

The output from the A/D converter 33 is input to the sync. signal generator 51. In this sync. signal generator 51, the horizontal and vertical synchronizing signals and CRI signal are reproduced. These synchronizing signals are input to the GCR timing generator 52. The GCR timing generator 52 outputs pulses at the timing synchronizing with the GCR signals GCRx and GCRy and controls the switches 36 and 46. The switch 36 is turned ON at the timings of 18H and 281H. The switch 46 is turned ON at the timing of 1H - 9H (or 263H - 272H).

The output from the A/D converter 33 is input to the frame memory 34 and also, to the subtractor 35 to which the output from the frame memory 34 is supplied. Therefore, the inter-frame differential signal is obtained from the subtractor 35. Further, the output from the analog/ digital converter 43 is also input to the frame memory 44 and the subtractor 45 to which the output from the frame memory 44 is supplied. Therefore, the inter-frame differential signal is obtained from the subtractor 45.

Out of the inter-frame differential signals described above, the signals led by the switches 36 and 46 contain ghost image data.

The inter-frame differential signal taken out by the switch 36 is temporarily stored in the buffer memory 37 and converted to the frequency region by the high-speed Fourier converter (referred to as FFT hereafter) 38. Further, the inter-frame differential signal taken out by the switch 46 is temporarily stored in the buffer memory 47 and converted to the frequency region by the FFT 48.

The output from the Fourier converter 38 is input to the dividers 61 and 62 and the output from the Fourier converter 48 is input to the dividers 71 and 72. In the dividers 61 and 71, the division by Rx is performed and in the dividers 62 and 72, the division by Rx and Ry is performed.

Rx and Ry are generated by the GCR generator 53 synchronized with the timing signal from the GCR timing generator 52 . These Rx and Ry are the reference signal waveforms shown in the equations (36), (37), (38) and (39) presented previously. Further, the outputs from the constrained Fourier converters 38 and 48 are the detection outputs "u" and "v".

Therefore, "1 + Gxx", "Gyx", "Gyy", and "1 + GYx" are obtained from the dividers 61, 62, 71 and 72. These outputs are input to the arithmetic unit 80. In this arithmetic unit 80, the operations shown by the equations (32) - (35) are carried out and C1, C2, C3 and C4 are obtained.

These signals are inversely transformed to the time domain in the reverse Fourier converters (referred to as $FFT^{-1}$) 63, 64, 74 and 73 and the converted outputs are weighted in the window function generators 65, 66, 76 and 75 and then, supplied as tap coefficients of the corresponding equalizing filters 67, 68, 78 and 77.

Here, the input to the equalizing filter 67 is the inphase demodulated signal and the input to the equalizing filter 68 is the orthogonal demodulated signal. So, the component (ghost) to which the sub signal is crosstalked is also removed. The outputs from the equalizing filters 67 and 68 are combined in the adder 69 and output as the equalization output of in-phase demodulated signal. On the other hand, the input to the equalizing filter 77 is the orthogonal demodulated signal and the input to the equalizing filter 78 is the in-phase demodulated signal. So, the component (ghost) to which the main signal is crosstalked is also removed. The outputs from the equalizing filters 77 and 78 are combined in the adder 79 and output as the equalization output of orthogonal demodulated signal.

Shown in FIGURE 8 is another embodiment at the receiver. The same symbols are assigned to the same parts as shown in FIGURE 7.

Now, it is assumed that C1, C2, C3 and C4 are to be approximately constructed by the non-cyclic type limited length (FIR) filters. Assuming that tap coefficients of the FIR filters to be "C1i", "C2i", "C3i" and "C4i", the equalization outputs "Z(p)" and "Z(q)" are given by the following equation:

$$Z(p) = \Sigma\, C1i\, Un\text{-}i + \Sigma\, C2i\, Vn\text{-}i \quad (40)$$

$$Z(q) = \Sigma\, C3i\, Un\text{-}i + \Sigma\, C4i\, Vn\text{-}i \quad (41)$$

When defining following equations (42) and (43) as shown by assuming the reference signals "x" and "y" at "r(p)" and "r(q)",

$$\Sigma\, e_p n = \Sigma\, (Z(p)n - r(p)) \quad (42)$$

$$\Sigma\, e_q n = \Sigma\, (Z(q)n - r(q)) \quad (43)$$

The following equation are obtained:

$$\Delta C1i = (d/dC1i)\,\{\Sigma\, e_p n\}^2 = \Sigma\, 2\{Z(p)n - r(p)\}\, Un\text{-}i \quad (44)$$

$$\Delta C2i = (d/dC2i)\,\{\Sigma\, e_p n\}^2 = \Sigma\, 2\{Z(p)n - r(p)\}\, Vn\text{-}i \quad (45)$$

$$\Delta C3i = (d/dC3i)\,\{\Sigma\, e_q n\}^2 = \Sigma\, 2\{Z(q)n - r(q)\}\, Un\text{-}i \quad (46)$$

$$\Delta C4i = (d/dC4i)\,\{\Sigma\, e_q n\}^2 = \Sigma\, 2\{Z(q)n - r(q)\}\, Vn\text{-}i \quad (47)$$

Therefore, in the FIR filter C1 it is only required to correct the i-th tap coefficient "C1i" repeatedly by a very fine amount in proportion to "ΔC1i" according to the equation (40).

The outputs from the A/D converters 33 and 43 correspond to "u" and "v" of the equations (40) and (41).

The output from the A/D converter 33 is supplied to the frame memory 34 and the subtractor to which the

output from the frame memory 34 is supplied. Further, the output from the A/D converter 43 is supplied to the frame memory 44 and to the subtractor 45 to which the output from the frame memory 44 is supplied.

The switches 81 and 91 select the outputs from the subtractors 35 and 45 only when corresponding GCR signals arrive, and normally select the outputs from the A/D converters 33 and 43 and introduce them into the corresponding waveform equalizing filters.

The output from the switch 81 is supplied to the waveform equalizing filters 84 and 95, and the correlators 83 and 96. The output from the switch 91 is supplied to the waveform equalizing filter 85 and the correlator 86. The output from the analog digital converter 43 supplied to the waveform equalizing filter 94 and the correlator 93.

The outputs from the waveform equalizing filters 84 and 85 are combined in the adder 87 and led to the output terminal 201 as the in-phase demodulated output and at the same time, input to the subtractor 102. Further, the outputs from the waveform equalizing filters 95 and 94 are also combined in the adder 97 and led to the output terminal 202 as the orthogonal demodulated output and at the same time, input to the subtractor 112.

The sync. signal generator 51 reproduces the synchronizing signal and CRI signal from the output from the A/D converter 33 and supplies these reproduced outputs to the CRR timing generator 52. Based on this output signal from the GCR timing generator 52, the GCR generators 101 and 111 generate the in-phase and orthogonal reference waveform signals r(p) and r(q), respectively. Differing from the previously shown embodiment, these signals become time domain signals. The output reference waveform signals GCRx = r(p) and GCRy = r(q) of the GCR generator 101 and 111 are input to the substractors 102, 112, respectively. Thus, the ghost information, that is, error signals (the results of operations by the equations (35) and (36)) are obtained and these error signals are input to the correlators 83 and 86, and 93 and 96.

In the correlators 83 and 86, and 96 and 93, the operations of the equations (44) - (47) are performed using the error signals and input signals to correct the tap coefficients of the corresponding equalizing filters.

In the period 18H (281H) when the in-phase GCR signal is sent and the period 1H - 9H (262H - 272H) when the orthogonal GRC signal is sent, the inter-frame difference signal taken by the frame memory 34 and the subtractor 35 is input to the correlators 83 and 96, while the inter-frame difference signal taken by the frame memory 44 and the substractor 45 is input to the correlator 86.

In the period 18H (281H), GCRx exists and the operations based on the equations (44) - (47) are performed assuming GCRx = r(P) , and GCRy = r(q) , and GCRy = r(q)=0 wile in the period 1H - 9H (262H - 272H), GCRy exists and the operations based on the equations (44) - (47) are performed assuming GCRy = r(q) and GCRx = r(P) = 0.

Thus, sub signals can be orthogonally modulated and multiplexed without impeding the ghost cancelling operation in the current television broadcasting. As mutual crosstalk occurs for short distance ghosts which are a problem from the visual viewpoint, multiplex signals by orthogonal modulation cannot be put to practical use in the television broadcasting unless a secondary equalizing filter for orthogonal multiplex is realized. According to the present invention, however, transmission of reference signals suited for orthogonal multiplexing which is compatible with the current broadcasting system and accurate reproduction of reference signals at a receiver are possible and therefore, the two dimensional equalizing filter can be accurately controlled at the receiver and a practical use of sub signals which are orthogonally multiplexed and transmitted becomes possible.

As described above, the present invention can provide an extremely preferable orthogonal multiplex signal processing apparatus.

While there have been illustrated and described what are at present considered to be preferred embodiments of the present invention, it will be understood by those skilled in the art that various changes and modifications may be made, and equivalents may be substituted for elements thereof without departing from the true scope of the present invention. In addition, many modifications may be made to adapt a particular situation or material to the teaching of the present invention without departing from the central scope thereof. Therefore, it is intended that the present invention not be limited to the particular embodiment disclosed as the best mode contemplated for carrying out the present invention, but that the present invention include all embodiments falling within the scope of the appended claims.

The foregoing description and the drawings are regarded by the applicant as including a variety of individually inventive concepts, some of which may lie partially or wholly outside the scope of some or all of the following claims. The fact that the applicant has chosen at the time of filing of the present application to restrict the claimed scope of protection in accordance with the following claims is not to be taken as a disclaimer or alternative inventive concepts that are included in the contents of the application and could be defined by claims differing in scope from the following claims, which different claims may be adopted subsequently during prosecution, for example for the purposes of a divisional application.

## Claims

1. A television signal transmitter for transmitting a conventional television signal as a main signal according to a VSB system, and in-phase modulating the main signal in a DSB region of the VSB region and multiplexing the main signal with a sub signal having an orthogonal modulation CHARACTERIZED IN THAT the transmitter comprises:
first inserting means (3, 4, 22) for inserting a reference signal into a first specific period within a vertical blanking period of the main signal;
second inserting means (13, 14, 22) for inserting a second reference signal into every other frame of the main signal in a second specific period of within a vertical blanking period of the main signal;
first interrupting means (22) for interrupting the transmission of the first reference signal to inspect for ghost images of the sub signal in the first specific period and its immediately preceding scanning period; and
second interrupting means (22) for interrupting the transmission of the second reference signal to inspect for ghosts of the sub signal in the second specific period of frames in which the second reference signal is not inserted.

2. A television signal transmitter as claim in claim 1, wherein the first and second specific are 10H - 21H and 1H - 9H within the vertical blanking period, where H is a horizontal scanning period.

3. A television signal transmitter as claim in claim 1, wherein the first and second specific periods are 273H - 284H and 263H - 272H within the vertical blanking period, where H is a horizontal scanning period.

4. A television signal receiver adapted to receive the transmission signals from the television signal transmitter as claimed in claim 1, CHARACTERIZED IN THAT the receiver comprises:
means (34, 35, 36, 52) for detecting the first reference signal in the first specific period of the vertical blanking period;
means (44, 45, 46, 52) for detecting the second reference signal by calculating one frame difference in the second specific period of the vertical blanking period; and
means (80) for controlling two dimensional equalization filters for the in-phase and orthogonal signals.

5. A television signal receiver as claimed in claim 4, wherein the first and second specific periods are 10H - 21H and 1H - 9H within the vertical blanking period, where H is a horizontal scanning period.

6. A television signal receiver as claimed in claim 4, wherein the first and second specific periods are 273H - 284H and 263H - 272H within the vertical blanking period, where H is a horizontal scanning period.

7. An orthogonal multiplex signal processing apparatus for transmetting a conventional television signal as a main signal according to a VSB system, and in-phase modulating the main signal in a DSB region of the VSB region and multiplexing the main signal with a sub signal having an orthogonal modulation, CHARACTERIZED IN THAT the apparatus comprises:
a television signal transmitter which includes,
means (3, 4, 22) for inserting a reference signal into a first specific scanning period of the main signal (10H - 21H, 273H - 284H, where H is a horizontal scanning period) within a vertical blanking period;
means (13, 14, 22) for inserting a second reference signal into every other frame of the main signal in a second specific scanning period of 1H - 9H or 263H - 272H;
means (22) for interrupting the transmission of the first reference signal to inspect for ghost images of the sub signal in the first specific scanning period and its immediately preceding scanning period; and
means (22) for interrupting the transmission of the second reference signal to inspect for ghosts of the sub signal in the second specific scanning period of frames in which the second reference signal is not inserted, and
a television signal receiver adapted to receive the transmission signals from the television signal transmitter, the receiver including,
means (34, 35, 36, 52) for detecting the first reference signal in the first specific scanning period (10H - 21H, 273H - 284H) of the vertical blanking period;
means (44, 45, 46, 52) for detecting the second reference signal by calculating one frame difference in the second specific scanning period of the vertical blanking period (1H - 9H or 263H - 272H); and

means (80) for controlling two dimensional equalization filters for the in-phase and orthogonal signals.

**8.** A television signal transmission apparatus for transmitting a standard television signal as a main signal according to a VSB system, in-phase modulating the main signal in a DSB region of the VSB region, multiplexing the main signal with a sub signal having an orthogonal modulation, CHARACTERIZED IN THAT the apparatus comprises:

means (3, 4, 22) for inserting a first reference signal in a prescribed position in a first specific scanning period (10H - 21H, 273H - 284H where H is a horizontal scanning period) of the vertical blanking period,

means (13, 14, 22) for inserting a second reference signal into every other frame in a second specific scanning period of 1H - 9H or 263H - 272H,

means (22) for interrupting the transmission of the reference signal to inspect for ghost images of the sub signal in the first specific scanning period and its immediately preceding scanning period, and

means (22) for interrupting the transmission of the second reference signal in the second specific scanning period of frames in which the reference signal is not inserted.

**9.** A television signal receiving apparatus adapted to receive the transmission signals from the television signal transmitting apparatus as claimed in claim 8, CHARACTERIZED IN THAT the receiving apparatus comprises:

first extracting means (34, 35, 36, 52) for extracting the first reference signal from the demodulated main signal by taking an inter-frame difference between the respective first specific scanning periods of the adjascent frames,

first obtaining means (61, 62, 80) for obtaining first and second coefficients by dividing the first reference signal from the first extracting means (34, 35, 36, 52) with the second reference signal which is pre-stored in the form of fixed waveform,

second exracting means (44, 45, 46, 52) for extracting the second reference signal from the demodulated sub signal by taking an inter-frame difference between the respective second specific scanning periods of the adjacent frames,

second obtaining means (71, 72, 80) for obtaining third and fourth coefficients by dividing the second reference signal from the second extracting means (44, 45, 46, 52) with the first reference signal and then with the second reference signal which are pre-stored in the form of fixed waveforms; and

means (80) for generating a first compensating signal for cancelling ghosts of the main signal, a second compensating signal for cancelling ghosts of the sub signal crosstalked to the main signal, a third compensating signal for cancelling ghosts of the sub signal, and a fourth compensating signal for cancelling ghosts of the main signal crosstalked to the sub signal by performing prescribed operations on the first through the fourth coefficients.

**10.** A television signal transmission and receiving apparatus which transmits a standard television signal as a main signal according to a VSB system, in-phase modulates the main signal in a DSB region of the VSB region, multiplexes the main signal with a sub signal having an orthogonal modulation, and which includes means for inserting a first reference signal in a prescribed position in a first specific scanning period (10H - 21H, 273H - 284H, where H is a horizontal scanning period) of the vertical blanking period, CHARACTERIZED IN THAT the apparatus comprises:

a transmitter, including;

means (13, 14, 22) for inserting a second reference signal into every other frame in a second specific sanning period of 1H - 9H or 263H - 272H, means (22) for interrupting the transmission of the reference signal to inspect for ghosts images of the sub signal in the first specific scanning period and its immediately preceding scanning period, and means (22) for interrupting the transmission of the second reference signal in the second specific scanning period of frames in which the reference signal is not inserted, and

a receiver including;

first extracting means (34, 35, 36, 52) for extracting the first reference signal from the demodulated main signal by taking an inter-frame difference between the respective first specific scanning periods of the adjacent frames,

first obtaining means (61, 62, 80) for obtaining first and second coefficients by dividing the first reference signal from the first extracting means (34, 35, 36, 52) with the second reference signal which is pre-stored in the form of fixed waveform,

second extracting means (44, 45, 46, 52) for extracting the second reference signal from the demodulated sub signal by taking an inter-frame difference between the respective second specific scanning periods of the adjacent frames,

second obtaining means (71, 72, 80) for obtaining third and fourth coefficients by dividing the second reference signal from the second extracting means (44, 45, 46, 52) with the first reference signal and then with the second reference signal which are pre-stored in the form of fixed waveforms, and

means (80) for generating a first compensating signal for cancelling ghosts of the main signal, a second compensating signal for cancelling ghosts of the sub signal crosstalked to the main signal, a third compensating signal for cancelling ghosts of the sub signal, and a fourth compensating signal for cancelling ghosts of the main signal crosstalked to the sub signal by performing prescribed operations on the first through the fourth coefficients.

FIG. 1

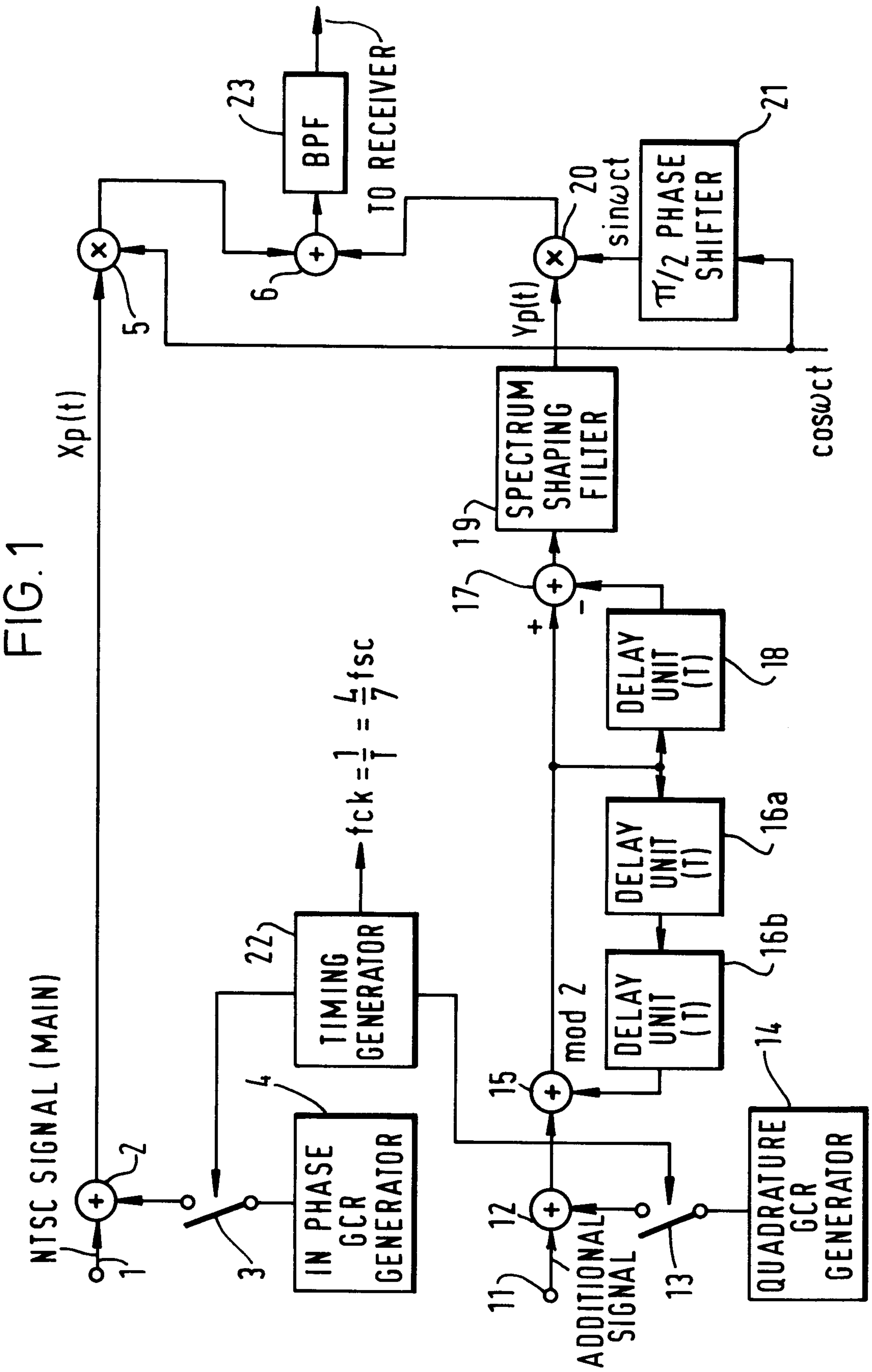

NTSC SIGNAL (MAIN)
IN PHASE GCR GENERATOR
TIMING GENERATOR
fck = 1/T = 4/7 fsc
Xp(t)
TO RECEIVER
BPF
ADDITIONAL SIGNAL
mod 2
DELAY UNIT (T)
DELAY UNIT (T)
DELAY UNIT (T)
SPECTRUM SHAPING FILTER
Yp(t)
sinωct
π/2 PHASE SHIFTER
cosωct
QUADRATURE GCR GENERATOR

FIG. 2

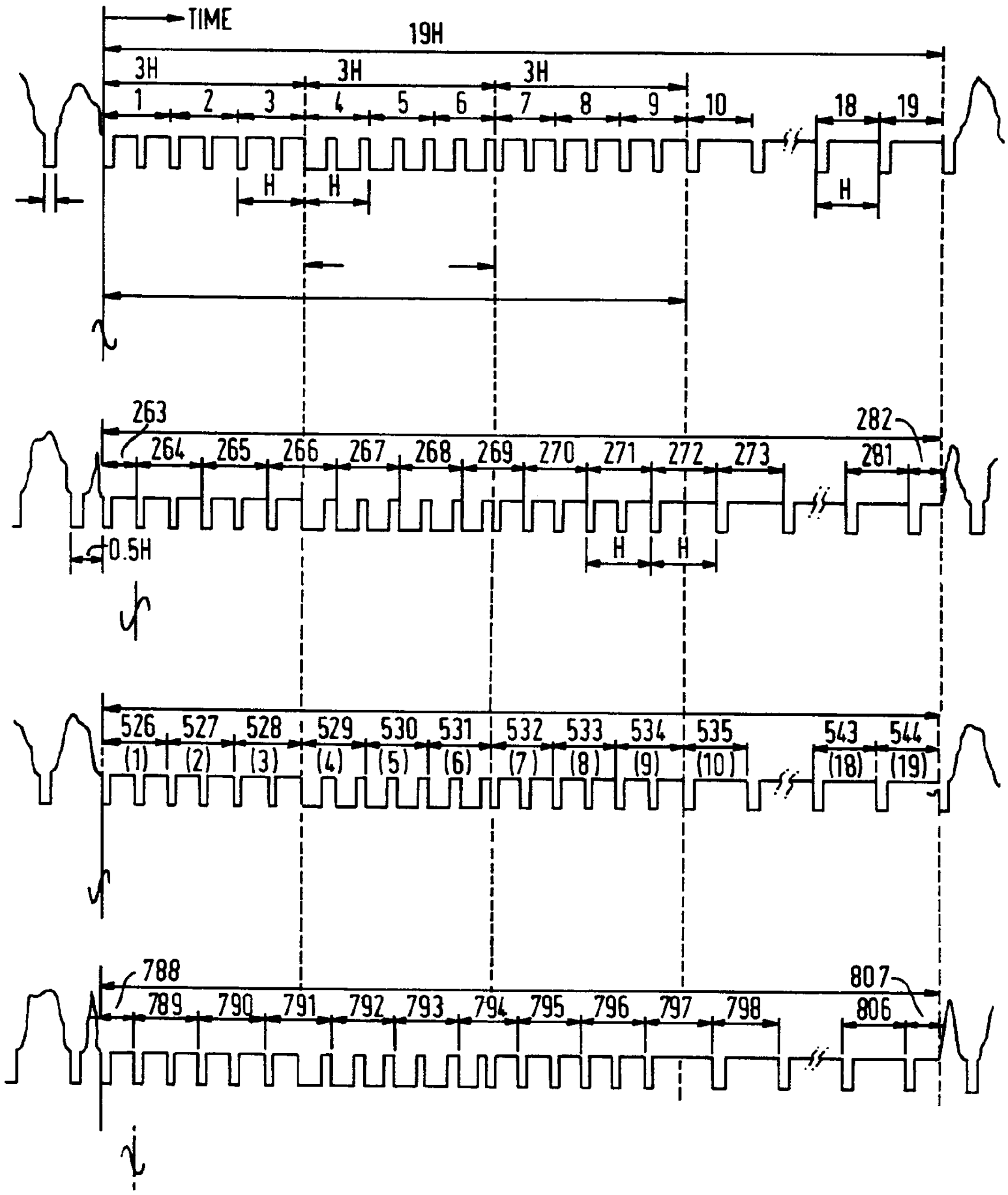
TIME
19H
3H
3H
3H
1
2
3
4
5
6
7
8
9
10
18
19
H
H
H
263
264
265
266
267
268
269
270
271
272
273
282
281
0.5H
H
H
526
527
528
529
530
531
532
533
534
535
543
544
(1)
(2)
(3)
(4)
(5)
(6)
(7)
(8)
(9)
(10)
(18)
(19)
788
789
790
791
792
793
794
795
796
797
798
807
806

FIG.3

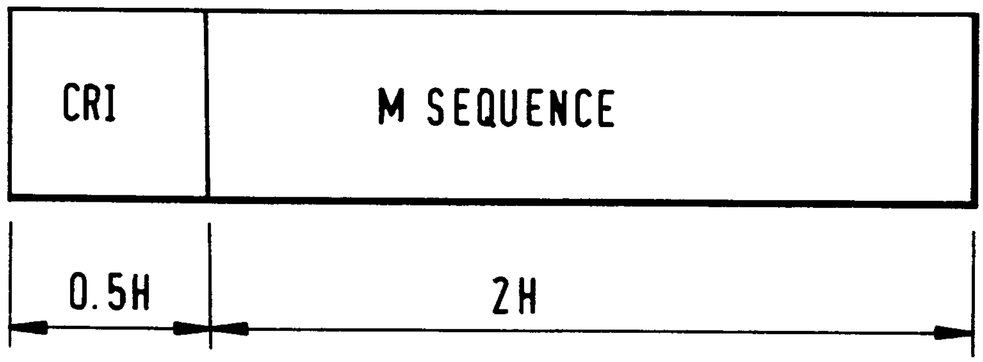


FIG.6A

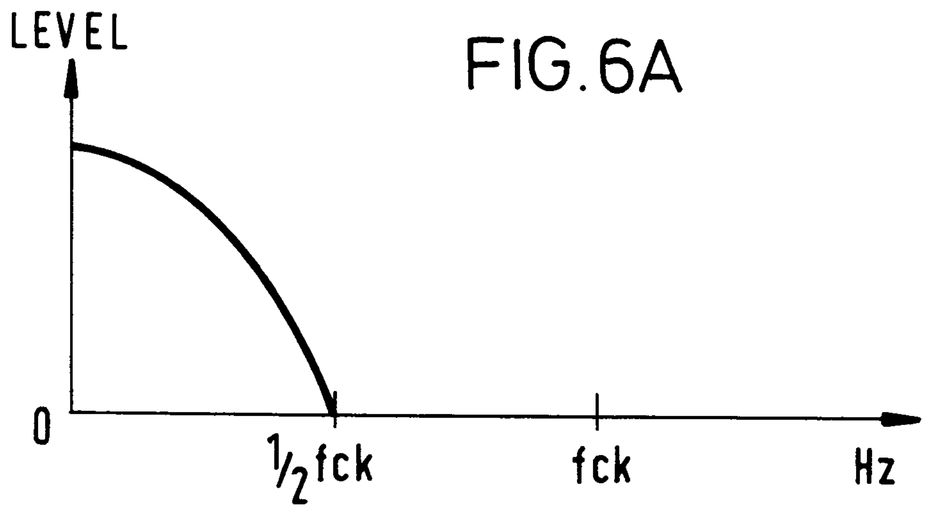


FIG.6B

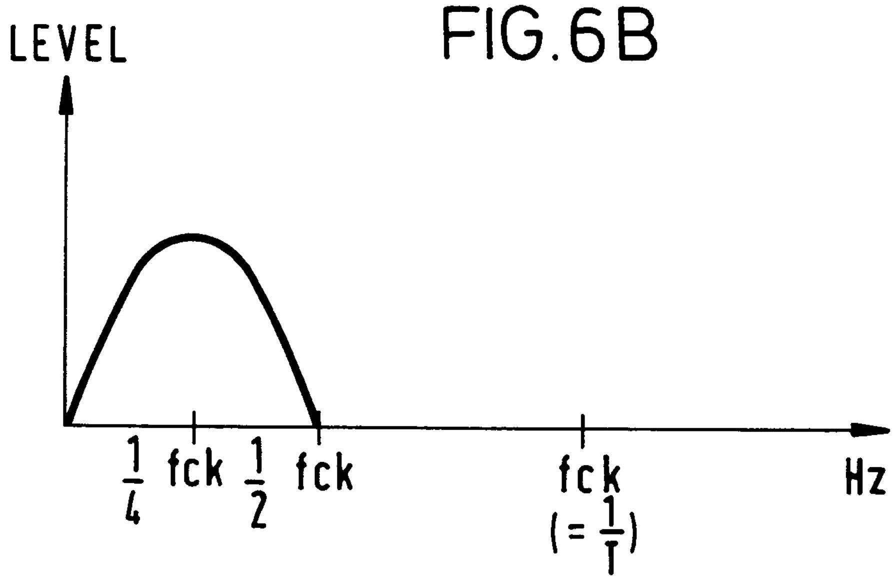

FIG.4

| | | | | | | | | |
|---|---|---|---|---|---|---|---|---|
| (A) INPUT DATA | 1 | 1 | 1 | 1 | 1 | 1 | 1 | 1 |
| (B) PRE-ENCODED OUTPUT | 1 | 1 | 0 | 0 | 1 | 1 | 0 | 0 |
| (C) $1 - D^2$ | 1 | 1 | -1 | -1 | 1 | 1 | -1 | -1 |

(D) OUTPUT

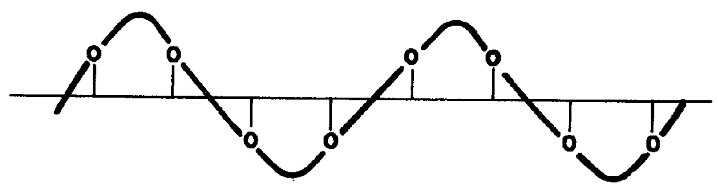

FIG.5

| | | | | | | | | | | | |
|---|---|---|---|---|---|---|---|---|---|---|---|
| A INPUT DATA | 1 | 0 | 1 | 1 | 0 | 1 | 0 | 1 | 1 | 1 | 0 |
| (B) PRE-ENCODED OUTPUT | 1 | 0 | 0 | 1 | 0 | 0 | 0 | 1 | 1 | 0 | 1 |
| (C) $1-D^2$ | 1 | 0 | -1 | 1 | 0 | -1 | 0 | 1 | 1 | -1 | 0 |

(D) OUTPUT

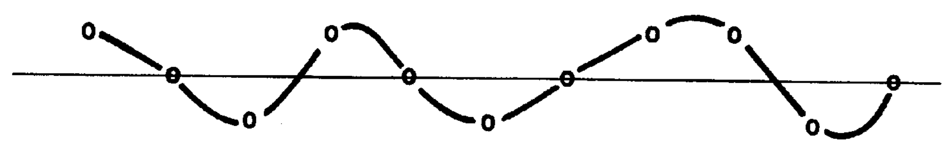

FIG.7

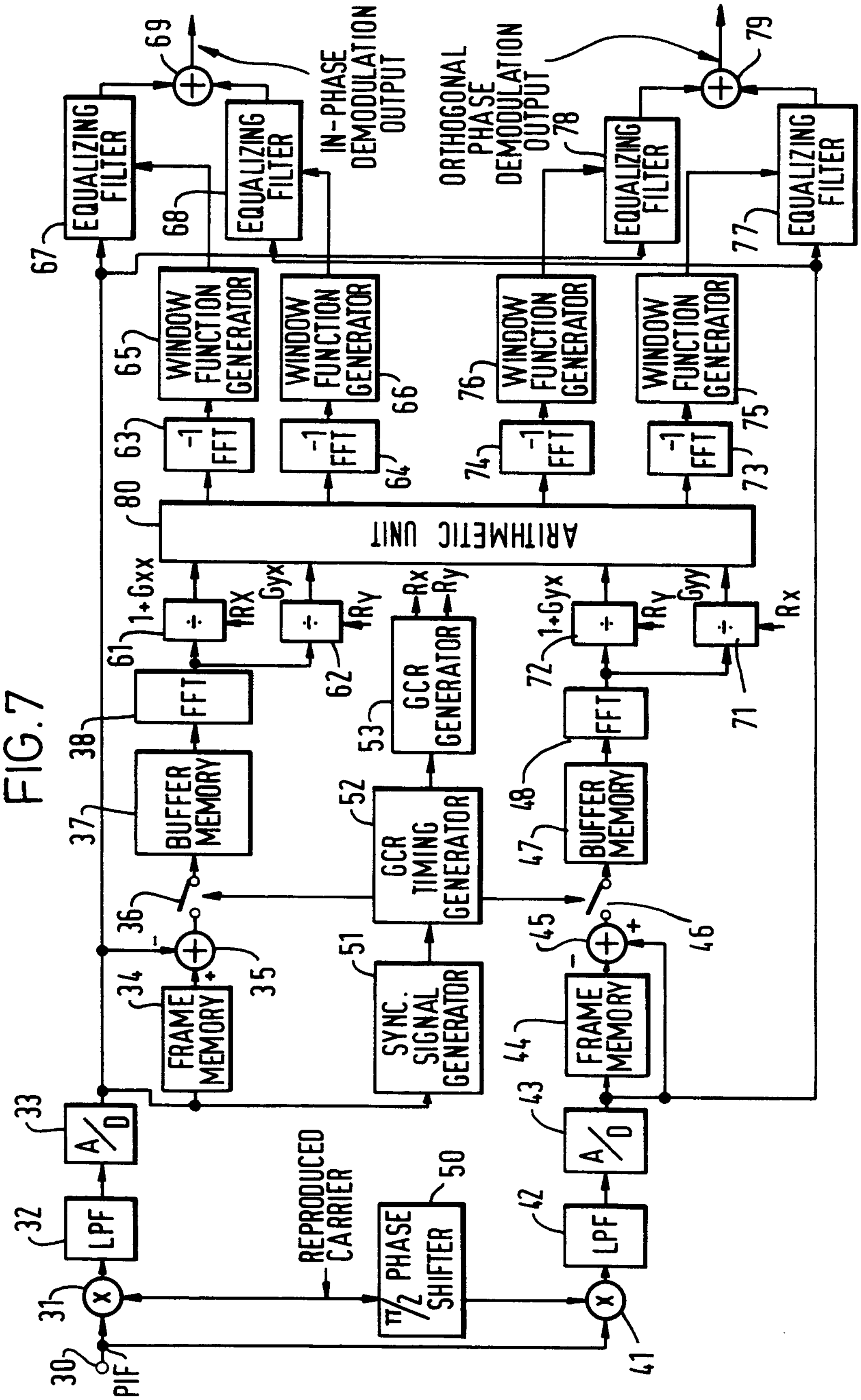
PIF
REPRODUCED CARRIER
π/2 PHASE SHIFTER
LPF
A/D
FRAME MEMORY
SYNC. SIGNAL GENERATOR
GCR TIMING GENERATOR
GCR GENERATOR
BUFFER MEMORY
FFT
1+Gxx
Gyx
1+Gyx
Gyy
Rx
Ry
ARITHMETIC UNIT
-1 FFT
WINDOW FUNCTION GENERATOR
EQUALIZING FILTER
IN-PHASE DEMODULATION OUTPUT
ORTHOGONAL PHASE DEMODULATION OUTPUT
30
31
32
33
34
35
36
37
38
41
42
43
44
45
46
47
48
50
51
52
53
61
62
63
64
65
66
67
68
69
71
72
73
74
75
76
77
78
79
80

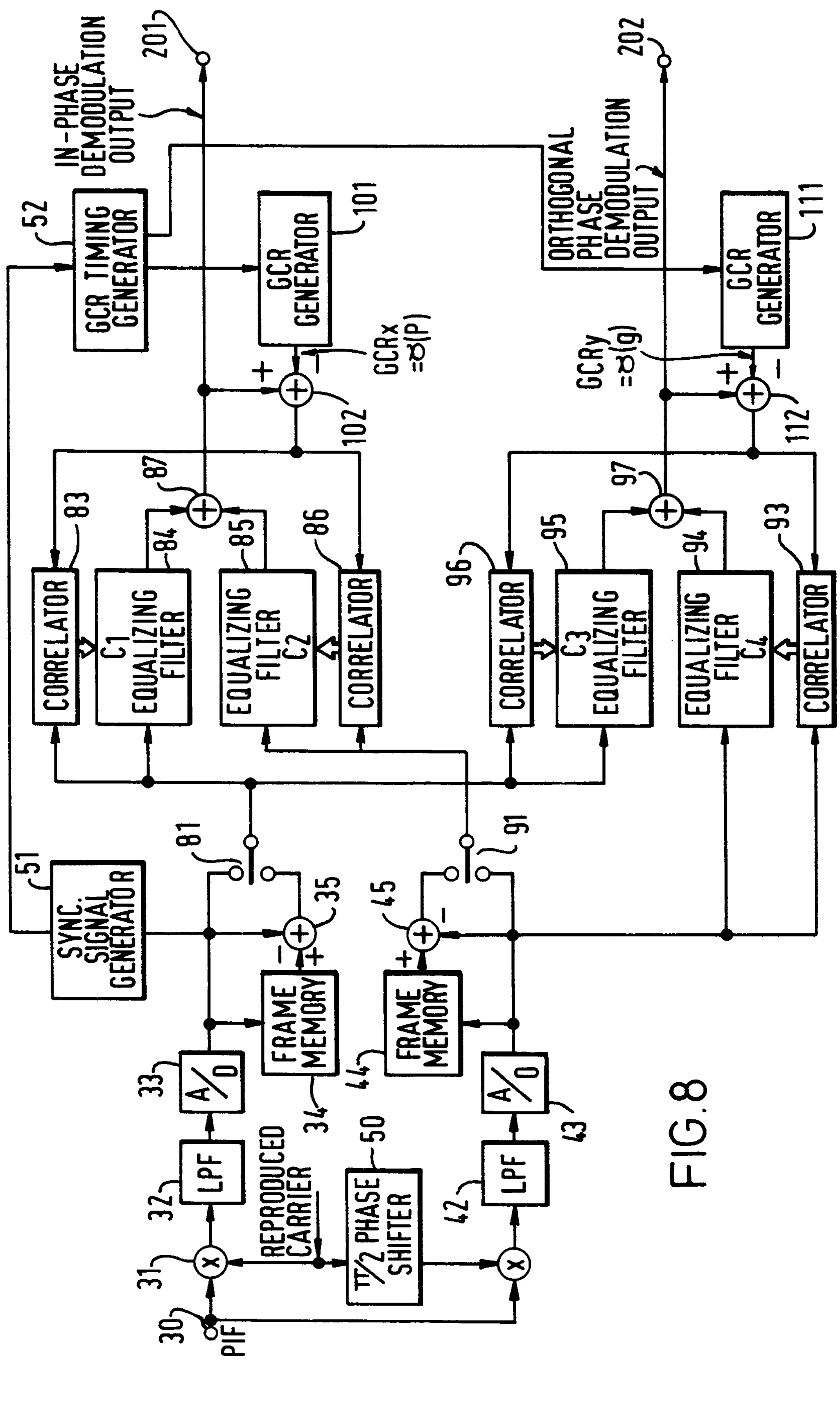

PIF
REPRODUCED CARRIER
LPF
A/D
FRAME MEMORY
π/2 PHASE SHIFTER
SYNC. SIGNAL GENERATOR
GCR TIMING GENERATOR
CORRELATOR
C1 EQUALIZING FILTER
EQUALIZING FILTER C2
C3 EQUALIZING FILTER
EQUALIZING FILTER C4
GCR GENERATOR
GCRx =ẟ(P)
GCRy =ẟ(g)
IN-PHASE DEMODULATION OUTPUT
ORTHOGONAL PHASE DEMODULATION OUTPUT
30
31
32
33
34
35
42
43
44
45
50
51
52
81
83
84
85
86
87
91
93
94
95
96
97
101
102
111
112
201
202


FIG.8